# EUROPÄISCHE PATENTSCHRIFT

(11) **EP 1 180 590 B1**
(45) Veröffentlichungstag und Bekanntmachung des Hinweises auf die Patenterteilung: **13.02.2008**
(21) Anmeldenummer: 01116807.7
(22) Anmeldetag: 10.07.2001
(51) Int. Cl.: F02D 41/02, F02D 41/14, F01N 9/00

(54) **Verfahren zur Gemischbildung für eine Brennkraftmaschine mit einem Katalysator im Abgasstrang**
Method for mixture forming in an internal combustion engine with a catalyst in the exhaust line
Méthode de formation de mélange pour moteur à combustion interne avec un catalyseur dans la ligne d'échappement

(30) Priorität: 18.08.2000 DE 10040517
(43) Veröffentlichungstag der Anmeldung: 20.02.2002
(73) Patentinhaber: Bayerische Motoren Werke Aktiengesellschaft, 80809 München (DE)
(72) Erfinder: Detterbeck, Stefan, 80804 München (DE); Hasenclever, Hanns-Christian, Dr., 80809 München (DE); Ramatschi, Stephan, 85604 Zorneding (DE); Preuss, Florian, 80809 München (DE); Müller, Peter, 81673 München (DE)

(56) Entgegenhaltungen:
- DE-A1- 4 433 919
- DE-A1- 19 801 815
- GB-A- 2 177 513
- US-A- 4 231 334

## Beschreibung

Die Erfindung bezieht sich nach dem Oberbegriff des Anspruches 1 auf ein Verfahren zur Gemischbildung für eine Brennkraftmaschine mit einem Katalysator im Abgassystem, bei dem eine einem zur Sauerstoffspeicherung fähigen Katalysator zugeordnete Lambda-/Sauerstoff-Sonde rückgekoppelt mit einer elektronischen Gemischbildungseinrichtung in mindestens einem Brennraum der Brennkraftmaschine eine im wesentlichen periodische Brennraum-Lambda-Schwingung des jeweiligen Luft-/Kraftstoff-Gemisches um stöchiometrische Verhältnisse bewirkt.

Ein derartiges Verfahren ist beispielsweise aus der DE 44 33 919 A1 bekannt, bei dem die Brennraum-Lambda-Schwingung auf eine ausreichende Speicherung von Sauerstoff in einem Katalysator ausgelegt ist. Bei einer Abweichung in Richtung mageres Gemisch mit erhöhtem Sauerstoffanteil wird bei diesem Verfahren mit der anschließenden Unterwelle ein fettes, sauerstoffarmes Gemisch eingesteuert zur Erzielung eines Summen-Sauerstoffvorrates für ein im wesentlichen stöchiometrisches Abgas.

Weiter ist es aus der DE 198 01 815 A1 bekannt, zur Einregelung eines stöchiometrischen Abgases mittels der Lambda-/Sauerstoff-Sonde die periodische Brennraum-Lambda-Schwingung kurzzeitig in einen mageren Gemischbereich oder kurzzeitig in einen fetten Gemischbereich zu verschieben.

Schließlich ist es im bekannten Stand der Technik üblich, bei insbesondere magerbetriebenen Ottomotoren mit einer Abgasanlage mit einem maschinennahen Vorkat bzw. Startkatalysator und einem weiteren Katalysator, insbesondere NOₓ-Speicher-Katalysator im Unterboden des Fahrzeuges ein Aufheizen des jeweiligen Katalysators anzustreben. Hierfür sind verschiedene Strategien bekannt, wie das Heizen durch Zündwinkelrücknahme, das Heizen durch Bankvertrimmung oder Zylindervertrimmung sowie das Heizen durch eine Doppeleinspritzung.

Nachteilig hierbei ist, dass das Heizen mit Zündwinkelrücknahme, Zylinder- und Bankvertrimmung oder Doppeleinspritzung nur zum Teil wirksam ist, da zu einem die Temperatur nur vor oder im Vorkat entsteht oder, wie bei der Bankvertrimmung, nur bei einer Y-Abgasanlage anwendbar ist.

Der Erfindung liegt die Aufgabe zugrunde, das gattungsgemäße Verfahren zur Gemischbildung derart weiterzubilden, dass ein knapp über der Anspringtemperatur betriebswarmer Katalysator bedarfsweise geheizt werden kann.

Diese Aufgabe ist mit dem Patentanspruch 1 dadurch gelöst, dass die Brennraum-Lambda-Schwingung durch eine gesonderte Vorsteuerung bezüglich Amplitude u./o. Frequenz u./o. Schwingungsform in Abhängigkeit von durchgesetzter Luftmasse und dem Sauerstoff-Speicherungsvermögen des Katalysators einschließlich dessen Sauerstoff-Ein- und Aus-Speicherungsverhalten derart moduliert wird, dass eine gesteigerte Sauerstoff-Einspeicherung für eine einem bedarfsweisen Heizen des Katalysators dienende exotherme Reaktion im Katalysator erzielt wird.

Der Vorteil der Erfindung ist darin zu sehen, dass bei einem Betrieb der Brennkraftmaschine in geringer Last oder Null-Last mit einem knapp über der Anspringtemperatur betriebswarmen Katalysator dieser über die erfindungsgemäße Gemischbildung derart konditioniert werden kann, dass mit der gesteigerten Sauerstoff-Einspeicherung eine exotherme Reaktion im Katalysator angestossen wird, die die Temperatur des Katalysators vorteilhaft erhöht in Richtung gesteigerter Konvertierungsleistung.

Zur vorteilhaften Entkoppelung der beiden Funktionen der Brennraum-Lambda-Schwingung zur Einstellung eines stöchiometrischen Abgases einerseits und zur Vorsteuerung der Heiz-Modulation andererseits wird in Weiterbildung der Erfindung vorgeschlagen, dass die gesonderte Heiz-Modulation der von der Gemischbildungseinrichtung generierten Brennraum-Lambda-Schwingung durch eine separate elektrische Steuereinrichtung vorgesteuert wird.

In weiterer Ausgestaltung vereinfacht sich das erfindungsgemäße Verfahren auch dadurch, dass aus den Signalen einer zwischen Brennkraftmaschine und einem Katalysator und/oder stromab des Katalysators angeordneten Lambda-/Sauerstoff-Sonde die Vorsteuerung der Heiz-Modulation abgeleitet wird.

Weitere Ausgestaltungen der Erfindung sind in den Unteransprüchen 4 mit 9 angegeben.

Die Erfindung ist im folgenden beschrieben.

Ausgangspunkt der Erfindung ist ein Verfahren zur Gemischbildung für eine Brennkraftmaschine mit einem Katalysator im Abgassystem, bei dem eine einem zur Sauerstoffspeicherung fähigen Katalysator zugeordnete Lambda-/Sauerstoff-Sonde rückgekoppelt mit einer elektronischen Gemischbildungseinrichtung in mindestens einem Brennraum der Brennkraftmaschine eine im wesentlichen periodische Brennraum-Lambda-Schwingung des jeweiligen Luft-/Kraftstoff-Gemisches um stöchiometrische Verhältnisse bewirkt.

Zur Weiterbildung dieses Verfahrens zum bedarfsweisen Heizen eines bei geringer Last der Brennkraftmaschine knapp über der Anspringtemperatur betriebswarmen Katalysators wird erfindungsgemäß vorgeschlagen, dass die Brennraum-Lambda-Schwingung durch eine gesonderte Vorsteuerung bezüglich Amplitude u./o. Frequenz u./o. Schwingungsform in Abhängigkeit von durchgesetzter Luftmasse und dem Sauerstoff-Speicherungsvermögen des Katalysators einschließlich dessen Sauerstoff-Ein- und Aus-Speicherungsverhalten derart moduliert wird, dass eine gesteigerte Sauerstoff-Einspeicherung für eine einem bedarfsweisen Heizen des Katalysators dienende exotherme Reaktion im Katalysator erzielt wird.

Hierfür wird die gesonderte Heiz-Modulation der von der Gemischbildungseinrichtung generierten Brennraum-Lambda-Schwingung durch eine separate elektrische Steuereinrichtung vorgesteuert. Die Vorsteuerung der Heiz-Modulation wird aus den Signalen einer zwischen Brennkraftmaschine und einem Katalysator und/oder stromab des Katalysators angeordneten Lambda-/Sauerstoff-Sonde abgeleitet.

Zur Erzielung eines gesamthaft stöchiometrischen Abgases kennzeichnet sich das Verfahren weiter dadurch, dass eine erste Lambda-/Sauerstoff-Sonde brennkraftmaschinennah und eine weitere Lambda-/Sauerstoff-Sonde stromab eines letzten Katalysators angeordnet ist, deren Signale mit denen der ersten Sonde in der Gemischbildungseinrichtung bei für ein Heizen modulierter Brennraum-Lambda-Schwingung korreliert werden für eine Abgasqualität von Lambda ca. 1,0, so dass vorzugsweise eine Abgaszusammensetzung - = 1,0 nach dem letzten Kat erzielt wird.

Das erfindungsgemäße Verfahren kommt bevorzugt zur Anwendung bei geringer Last oder Null-Last der Brennkraftmaschine, wobei die Heizung vor einem betriebsbedingten Unterschreiten eines Schwellwertes der Konvertierungsleistung des Katalysators zugeschaltet wird. Damit kann in vorteilhafter Weise ein Ausgehen des Katalysators bei den vorgenannten Lastzuständen vermieden werden. Desweiteren kann mit der zugeschalteten Heizung die Temperatur des Katalysators in eine höhere Konvertierungsleistung verschoben werden.

Die Zuschaltung der Heizung bei den vorgenannten Lastzuständen kann vorzugsweise dadurch ausgelöst werden, dass aus dem Gradientenverlauf einer betriebsbedingten Abkühlung des Katalysators bei geringer Maschinenlast ein Abkühlungsverlauf prognostiziert wird und mittels der Prognose die Heizung vorbestimmt vor Unterschreiten des Schwellwertes der Konvertierungsleistung des Katalysators zugeschaltet wird. Damit kann ein Absinken der Temperatur des Katalysators zu nahe an seine Anspringtemperatur vorteilhaft vermieden werden und weiter in Abhängigkeit der Umgebungstemperatur rechtzeitig die Heizung zugeschaltet werden.

Weiter ist das erfindungsgemäße Verfahren so gestaltet, dass die Heiz-Modulation der Brennraum-Lambda-Schwingung in Abhängigkeit eines Heizbedarfes gesteuert/geregelt wird und somit ein dem jeweiligen Bedarf optimal angepasster Kraftstoffverbrauch erzielt wird.

Hinsichtlich der Ausgestaltung eines Abgassystems der Brennkraftmaschine kann das erfindungsgemäße Verfahren dahingehend modifiziert werden, dass in einem Abgasstrang mit mehreren Katalysatoren diese mit unterschiedlichen Sauerstoff-Speicherverhalten gewählt werden. Vorzugsweise wird ein maschinennaher Katalysator mit einem langsamen Sauerstoff-Speicher-Verhalten und ein maschinenferner Katalysator mit einem schnellen Sauerstoff-Speicher-Verhalten gewählt, wobei gegebenenfalls eine Brennraum-Lambda-Schwingung mit großer Amplitude generiert wird und ferner magere Oberwellen und fette Unterwellen unterschiedlich geformt sein können.

Mit dieser verfahrenstechnischen Maßnahme kann ein maschinennaher Katalysator bezüglich der zusätzlichen Heizung wesentlich reduziert sein, während der maschinenferne Katalysator im Unterboden des Fahrzeuges verstärkt mit Sauerstoff versorgt ist zum bedarfsweisen Heizen.

Mit dem erfindungsgemäßen Verfahren wird die Temperatur im wesentlichen dort erzeugt wo sie benötigt wird, wie z.B. im Hauptkat für eine Desulfatierung. Die eingangs genannten Heizmaßnahmen können zusätzlich überlagert werden, z.B. Zündwinkelmaßnahmen bis zum Anspringen eines Vorkat, dann zusätzlich Bank- bzw. Zylindervertrimmung bis zum Anspringen des Hauptkatalysators, der anschließend bei abgeschaltetem Heizen durch Vertrimmen bzw. 2-Modulation nach dem erfindungsgemäßen Verfahren geheizt wird. Das erfindungsgemäße Verfahren ist ein wirkungsgrad-optimales Heizverfahren und in vorteilhafter Weise emissionsneutral.

Mit der Erfindung ergibt sich ferner der Vorteil einer Temperaturerhöhung auf z.B. 650°C zur Desulfatisierung eines NOₓ-Speicherkatalysators sowie eines Dreiwege-Katalysators.

## Patentansprüche

1. Verfahren zur Gemischbildung für eine Brennkraftmaschine mit einem Katalysator im Abgassystem,
bei dem eine einem zur Sauerstoffspeicherung fähigen Katalysator zugeordnete Lambda-/Sauerstoff-Sonde rückgekoppelt mit einer elektronischen Gemischbildungseinrichtung in mindestens einem Brennraum der Brennkraftmaschine eine im wesentlichen periodische Brennraum-Lambda-Schwingung des jeweiligen Luft-/Kraftstoff-Gemisches um stöchiometrische Verhältnisse bewirkt,
**dadurch gekennzeichnet,**
- **dass** die Brennraum-Lambda-Schwingung durch eine gesonderte Vorsteuerung bezüglich Amplitude u./o. Frequenz u./o. Schwingungsform in Abhängigkeit von durchgesetzter Luftmasse und dem Sauerstoff-Speicherungsvermögen des Katalysators einschließlich dessen Sauerstoff-Ein- und Ausspeicherungsverhalten derart moduliert wird, dass
- eine gesteigerte Sauerstoff-Einspeicherung für eine einem bedarfsweisen Heizen des Katalysators dienende exotherme Reaktion im Katalysator erzielt wird.

2. Verfahren nach Anspruch 1, **dadurch gekennzeichnet, dass** die gesonderte Heiz-Modulation der von der Gemischbildungseinrichtung generierten Brennraum-Lambda-Schwingung durch eine separate elektronische Steuereinrichtung vorgesteuert wird..

3. Verfahren nach Anspruch 1 und 2, **dadurch gekennzeichnet,**
- **dass** aus den Signalen einer zwischen Brennkraftmaschine und einem Katalysator und/oder stromab des Katalysators angeordneten Lambda-/Sauerstoff-Sonde die Vorsteuerung der Heiz-Modulation abgeleitet wird.

4. Verfahren nach einem der Ansprüche 1 bis 3, **dadurch gekennzeichnet,**
- **dass** eine erste Lambda-/Sauerstoff-Sonde brennkraftmaschinennah und
- **dass** eine weitere Lambda-/Sauerstoff-Sonde stromab eines letzten Katalysators angeordnet ist, deren
- Signale mit denen der erste Sonde in der Gemischbildungseinrichtung bei für ein Heizen modulierter Brennraum-Lambda-Schwingung korreliert werden für eine Abgasqualität von Lambda ca. 1,0.

5. Verfahren nach den Ansprüchen 1 bis 4, **dadurch gekennzeichnet, dass** die Heizung bei geringer Last der Brennkraftmaschine vor betriebsbedingtem Unterschreiten eines Schwellwertes der Konvertierungsleistung des Katalysators zugeschaltet wird.

6. Verfahren nach Anspruch 5, **dadurch gekennzeichnet,**
- **dass** aus dem Gradientenverlauf einer betriebsbedingten Abkühlung des Katalysators bei geringer Maschinenlast ein Abkühlungsverlauf prognostiziert wird und
- mittels der Prognose die Heizung vorbestimmt vor Unterschreiten des Schwellwertes der Konvertierungsleistung des Katalysators zugeschaltet wird.

7. Verfahren nach den Ansprüchen 1 bis 6, **dadurch gekennzeichnet, dass** die Heiz-Modulation der Brennraum-Lambda-Schwingung in Abhängigkeit eines Heizbedarfes gesteuert/geregelt wird.

8. Verfahren nach einem der Ansprüche 1 bis 7, **dadurch gekennzeichnet, dass** in einem Abgasstrang mit mehreren Katalysatoren diese mit unterschiedlichen Sauerstoff-Speicherverhalten gewählt werden.

9. Verfahren nach Anspruch 8, **dadurch gekennzeichnet,**
- **dass** ein maschinennaher Katalysator mit einem langsamen Sauerstoff-Speicherverhalten und
- ein maschinenferner Katalysator mit einem schnellen Sauerstoff-Speicherverhalten gewählt wird, wobei
- ggf. eine Brennraum-Lambda-Schwingung mit großer Amplitude generiert wird und
- magere Oberwellen und fette Unterwellen unterschiedlich geformt sein können.

## Claims

1. A method for mixture forming in an internal combustion engine comprising a catalytic converter in the exhaust gas system,
in which a lambda/oxygen sensor associated with a catalytic converter capable of oxygen storage, coupled back to an electronic mixture forming device, brings about a substantially periodic combustion chamber lambda oscillation of the respective air/fuel mixture around stoichiometric ratios in at least one combustion chamber of the internal combustion engine,
**characterised in that**
- the combustion chamber lambda oscillation is modulated by a separate precontrol with regard to amplitude and/or frequency and/or oscillation form as a function of the air mass throughput and the oxygen storage capacity of the catalytic converter including its oxygen storage and feed-out behaviour in such a way that
- an increased oxygen storage for an exothermic reaction used for heating the catalytic converter when necessary is achieved in the catalytic converter.

2. A method according to claim 1, **characterised in that** the separate heating modulation of the combustion chamber lambda oscillation generated by the mixture forming device is precontrolled by a separate electronic control device.

3. A method according to claim 1 and 2, **characterised in that**
- the precontrol of the heating modulation is derived from the signals of a lambda/oxygen sensor arranged between the internal combustion engine and a catalytic converter and/or downstream from the catalytic converter.

4. A method according to any one of claims 1 to 3, **characterised in that**
- a first lambda/oxygen sensor is arranged close to the internal combustion engine and
- a further lambda/oxygen sensor is arranged downstream from a last catalytic converter, of which the
- signals are correlated with those of the first sensor in the mixture forming device at a combustion chamber lambda oscillation modulated for heating, for an exhaust gas quality of lambda about 1.0.

5. A method according to any one of claims 1 to 4, **characterised in that** the heating at a low load of the internal combustion engine is switched on prior to the falling below, due to operation, of a threshold value of the conversion power of the catalytic converter.

6. A method according to claim 5, **characterised in that**
- a cooling course is predicted from the gradient course of a cooling of the catalytic converter caused by operation when there is a low engine load and
- by means of the prediction, the heating is switched on in a predetermined manner before the threshold value of the conversion power of the catalytic converter is fallen below.

7. A method according to claims 1 to 6, **characterised in that** the heating modulation of the combustion chamber lambda oscillation is controlled by open-loop or closed-loop control as a function of a heating requirement.

8. A method according to any one of claims 1 to 7, **characterised in that** in an exhaust gas line with a plurality of catalytic converters, they are selected to have different oxygen storage behaviours.

9. A method according to claim 8, **characterised in that**
- a catalytic converter close to the engine with a slow oxygen storage behaviour and
- a catalytic converter remote from the engine with a rapid oxygen storage behaviour are selected, wherein
- a combustion chamber lambda oscillation with a large amplitude is optionally generated and
- lean harmonics and rich sub-harmonics may be formed differently.

## Revendications

1. Procédé de préparation du mélange pour un moteur à combustion interne dont le système d'échappement est équipé d'un catalyseur,
selon lequel une sonde à oxygène/coefficient λ, associée à un catalyseur susceptible d'accumuler de l'oxygène, est couplée en réaction sur une installation électronique de préparation du mélange dans au moins une chambre de combustion du moteur à combustion interne pour produire une oscillation pratiquement périodique du coefficient λ de la chambre de combustion du mélange air/carburant respectif autour de l'état stoechiométrique,
**caractérisé en ce qu'**
- on module l'oscillation du coefficient λ de la chambre de combustion par une commande préalable particulière en amplitude et/ou en fréquence et/ou en forme d'oscillation en fonction du débit massique d'air et de la capacité d'accumulation d'oxygène dans le catalyseur y compris son comportement pour stocker et déstocker l'oxygène,
- de façon à augmenter l'accumulation d'oxygène dans le catalyseur pour une réaction exothermique servant le cas échéant à chauffer le catalyseur.

2. Procédé de préparation du mélange selon la revendication 1,
**caractérisé en ce que**
la modulation particulière de chauffage par l'oscillation du coefficient λ de la chambre de combustion générée par l'installation de préparation du mélange est commandée préalablement par une installation de commande électronique distincte.

3. Procédé de préparation du mélange selon les revendications 1 et 2,
**caractérisé en ce que**
à partir des signaux d'une sonde à oxygène/coefficient λ installée entre le moteur à combustion interne et un catalyseur et/ou en aval du catalyseur, la commande préalable déduit la modulation de chauffage.

4. Procédé de préparation du mélange selon l'une des revendications 1 à 3,
**caractérisé par**
- une première sonde à oxygène/coefficient λ à proximité du moteur à combustion interne, et
- une autre sonde à oxygène/coefficient λ en aval du dernier catalyseur, dont
- les signaux sont mis en corrélation avec ceux de la première sonde dans l'installation de préparation du mélange pour l'oscillation du coefficient λ de la chambre de combustion modulée pour un chauffage, pour une qualité des gaz d'échappement du coefficient λ de l'ordre de 1,0.

5. Procédé de préparation du mélange selon les revendications 1 à 4,
**caractérisé en ce qu'**
à faible charge du moteur à combustion interne, le chauffage est branché avant que par suite du fonctionnement on passe en dessous d'une valeur de seuil de la puissance de conversion du catalyseur.

6. Procédé de préparation du mélange selon la revendication 5,
**caractérisé en ce qu'**
- à partir de la forme du gradient de refroidissement du catalyseur lié au fonctionnement, en cas de faible charge du moteur, on pronostique un processus de refroidissement et
- à l'aide du pronostic, on prédéfinit le chauffage avant de dépasser vers le bas le seuil de la puissance de conversion du catalyseur.

7. Procédé de préparation du mélange selon les revendications 1 à 6,
**caractérisé en ce qu'**
on commande/régule la modulation de chauffage de l'oscillation du coefficient λ de la chambre de combustion en fonction d'une demande de chauffage.

8. Procédé de préparation du mélange selon l'une des revendications 1 à 7,
**caractérisé en ce que**
dans la conduite des gaz d'échappement à plusieurs catalyseurs, on les sélectionne avec des comportements d'accumulation d'oxygène différents.

9. Procédé de préparation du mélange selon la revendication 8,
**caractérisé en ce qu'**
- on choisit un catalyseur à comportement d'accumulation d'oxygène lent pour une installation à proximité du moteur, et
- on choisit un catalyseur à comportement d'accumulation d'oxygène rapide pour une installation éloignée du moteur,
- le cas échéant, on génère une oscillation du coefficient λ de la chambre de combustion avec une grande amplitude, et
- on donne des formes différentes aux harmoniques supérieures maigres et aux harmoniques inférieures riches.
